# EUROPEAN PATENT APPLICATION

(11) **EP 3 329 771 A1**
(43) Date of publication of application: **06.06.2018**
(21) Application number: 17204883.7
(22) Date of filing: 01.12.2017
(51) Int. Cl.: A01K 63/02, B65D 85/50

(54) **PACKAGING SYSTEM FOR LIVE PRODUCTS**

(30) Priority: 02.12.2016 GB 201620531
(71) Applicant: Linpac Packaging Limited, West Yorkshire WF7 5DE (GB)
(72) Inventor: Rawlings, Paul, Smolec 55-080 (PL)
(74) Representative: Jacob, Reuben Ellis

(57) **Abstract**

The present invention relates to a system (1) for packaging a live product (P), such as a live product capable of cutaneous respiration, said system comprising an insert (2) comprising a base (3) and a plurality of ribs (4) extending therefrom. The present invention also relates to a method for packaging and/or transporting a live product (P) using said packaging system (1).

## Description

The present invention relates to a packaging system for the transportation of food products. More particularly, the present invention relates to a packaging system for the transportation of live products capable of cutaneous respiration, such as certain species of fish.

In a number of eastern European countries, one of the most important celebrations of the year is the Christmas Eve dinner, during which twelve dishes are served, including the traditional Christmas Eve carp. Customers typically buy fish from shops or street corner sellers, where the vendor bags the fish live. The fish is taken home and are kept alive in large buckets or a bathtub until Christmas Eve, when they are cooked.

There are naturally some ethical concerns with respect to the transport of live products and the transport process should cause as little stress and harm as possible to the live fish. The transportation of live fish in a paper wrapper and/or plastic bag would cause it unnecessary distress and increases the risk of the fish dying before it reaches the kitchen. The fish could be transported in water. However, the larger the fish and the more water is required so that a strong bag or container would be used. This is uneconomical for the vendors and heavy for the customer carrying the fish home.

Some live products are capable of cutaneous respiration or cutaneous gas exchange. For example, carps can breathe through their skin as well as through their gills. Other animals, including fish, amphibians, reptiles and some mammals can also perform cutaneous gas exchange. When a carp is packaged and transported in a paper wrapper and/or plastic bag, the packaging adheres to the carp's skin and prevents cutaneous respiration so that the fish suffocates.

It is an object of the invention to at least alleviate the above-mentioned disadvantages, or to provide an alternative to existing products.

According to a first aspect of the invention, there is provided a system for packaging a live product, said system comprising an insert comprising a base and a plurality of ribs extending therefrom. The plurality of ribs creates a space between the product's skin and the base so as to allow air passage therebetween. Thus, the invention seeks to provide a new packaging system to improve cutaneous respiration to decrease stress levels and harm during packaging and transportation and to increase the fish survival rate.

The packaging system according to the present invention is particularly suitable for the packaging and/or transportation of one or more animal products capable of cutaneous respiration. The insert increases the surface area of skin available for cutaneous gas exchange. The live/animal product is preferably one or more fish.

Preferably, the insert comprises a plurality of continuous ribs, the continuous ribs being parallel to each other, for air passage therebetween. Alternatively or additionally, the insert comprises a plurality of co-linear ribs. Two co-linear ribs are for example separated by a gap, which enable air passage therethrough, thereby further improving the potential for cutaneous respiration. Preferably, the insert comprises a plurality of parallel sets of co-linear ribs. As mentioned above, this parallel configuration of the continuous ribs and/or sets of co-linear ribs enables optimum air flow. This parallel configuration is also advantageous in that the insert can easily be folded or rolled around the fish.

Preferably, sets of co-linear ribs are arranged such that the ribs on two adjacent sets are in a staggered configuration to improve air circulation.

The numerical ranges described herein include the lowermost and uppermost values.

Preferably, the distances between two (sets of) ribs are substantially identical across the surface of the insert. In a preferred embodiment, the distance between two parallel (sets of) ribs is between 2 mm and 40 mm, preferably 18 mm. It has been found that when two (sets of) ribs are separated by less than 2mm, there is limited air passage. Above 40mm, the fish skin-to-base contact becomes too important to allow efficient cutaneous respiration.

Preferably, the ribs are of substantially identical height. In a preferred embodiment, the height of each rib is between 5 mm and 15 mm, preferably 5 mm to 12 mm, more preferably 10 mm. It has been found that if the ribs are shorter than 5mm, then the fish skin-to-base contact becomes too important to allow efficient cutaneous respiration. Above 15mm, the packaging system becomes too voluminous to be practical to transport and uneconomical.

Preferably, the gaps between two co-linear ribs are substantially identical. In a preferred embodiment, the distance between two co-linear ribs is between 25 mm and 50 mm. If the gap is narrower than 25mm, then air passage becomes compromised. Above 50mm, the fish skin starts contacting the base.

In a preferred embodiment, the ribs may comprise one or more apertures or be pierced to improve air circulation within the packaging system.

Other suitable shapes, such as circular protrusions may be suitable, but generally elongated ribs are preferred because this specific shape assists in the folding or rolling of the insert, the positioning of the insert into the outer packaging, the general comfort of the fish, minimising skin-to-base contact and increasing cutaneous gas exchange.

In a preferred embodiment, the insert is nestable and/or stackable with another insert of the same type. Preferably, the ribs of the insert are hollow to allow nesting with another insert of the same type. Preferably, each rib has one or more sloped sides to allow easy nesting/denesting of inserts. More preferably, each rib only has sloped sides.

In a preferred embodiment, the rib pattern is such that the plurality of ribs are configured and arranged as a mirror image so that the inserts are stackable with inserts of the same type. For example, the pattern is a mirror image when the insert is rotated around its centre.

Preferably, the insert is made of a material which is flexible so that the insert is foldable to partially or completely surround the live product. In a preferred embodiment, the insert is provided, transported and/or stored as a ribbed insert in an overall flat configuration. In use, it may be folded to partially or completely surround the live product. The parallel rib pattern also assists in the folding of the insert in the correct configuration.

In a preferred embodiment, the insert is foldable into a U-shape. The live fish is placed in the cradle of the U-shape and so that ribs are on the sides of the fish and underneath the fish. The insert may alternatively be provided in a pre-formed U-shape form.

In a preferred embodiment, the insert is made of a plastics material. Plastics materials are preferred to materials such as cardboard which will absorb the moisture from the fish and/or lose its shape to an extent such that the cardboard will contact the fish skin.

Suitable food compatible plastics material such as polypropylene, polystyrene and other co-polymers may be used. A preferred plastics material is polyethylene terephthalate (PET) for its recyclability and clarity. Preferably, the insert comprises or consists of amorphous polyethylene terephthalate (APET) or recycled polyethylene terephthalate (rPET). In a preferred embodiment, the insert consists of a monolayer of amorphous polyethylene terephthalate (APET).

Some preferred plastics materials are gas-permeable. The insert is preferably devoid of any laminating, coating or additional layer which might prevent gas permeation.

In a preferred embodiment, the system further comprises an outer packaging configured and arranged to partially surround the insert. The outer packaging is configured and arranged to receive the insert therein.

Preferably, the outer packaging comprises a plastics bag. The bag may comprise or consist of low density polyethylene (LDPE).

In an embodiment, the insert is detachably inserted to the bag. In other words, the bag and the insert may be provided separated and the insert inserted into the bag when required, e.g. when packaging the fish. This is advantageous for the transportation and storage of the empty packaging system. Alternatively, the packaging system may be provided in an assemble state. In other words, the insert is secured to the outer packaging e.g. by means of an adhesive, welding or any other suitable means.

In a preferred embodiment, the shape and relative dimensions of the outer packaging and the insert are such that movement of the insert within the outer packaging is limited. Preferably, the inner dimensions of the outer packaging are larger than the outer dimensions of the insert so that the outer packaging can receive the insert, and the inner dimensions of the outer packaging are small enough to limit movement of the insert within the outer packaging.

According to another aspect of the invention, there is provided a method for packaging and/or transporting one or more live products, such as fish, comprising the step of packaging the live product(s) in the insert in a packaging system as described above.

The method may comprise the step of providing an outer packaging and an insert. The method may comprise the step of inserting an insert into an outer packaging. The method may comprise the step of providing a foldable insert.

According to another aspect of the invention, there is provided a method for manufacturing a packaging system as described above comprising the step of thermoforming an insert from a sheet.

The invention will be further described with reference to the drawings and figures, in which
Figure 1 is a schematic (perspective) representation of an insert according to the present invention,

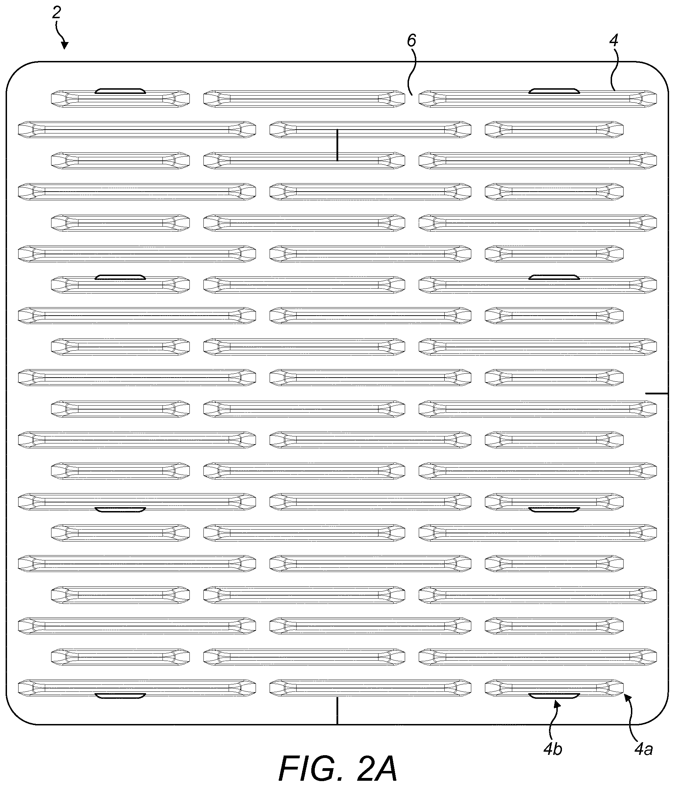

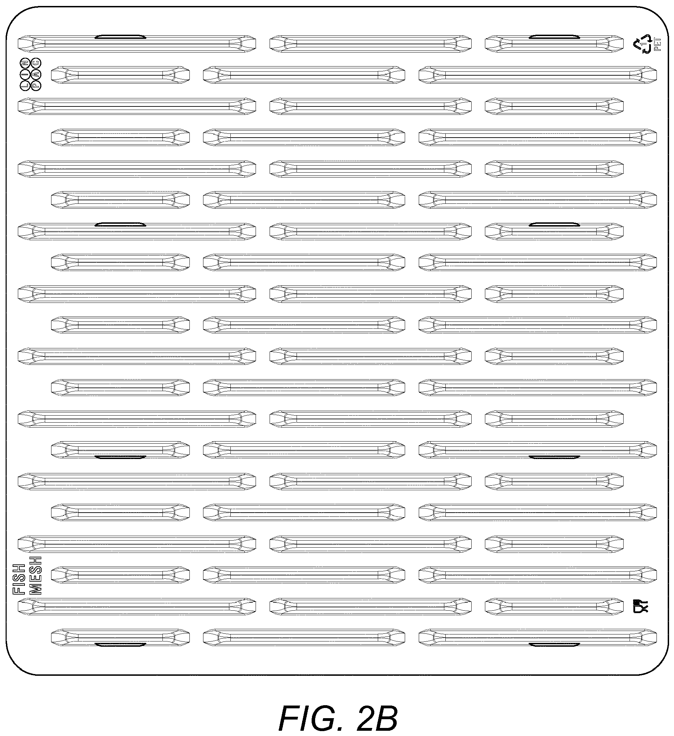

Figures 2A and 2B are is schematic (top and bottom) representations of an insert as shown in figure 1,

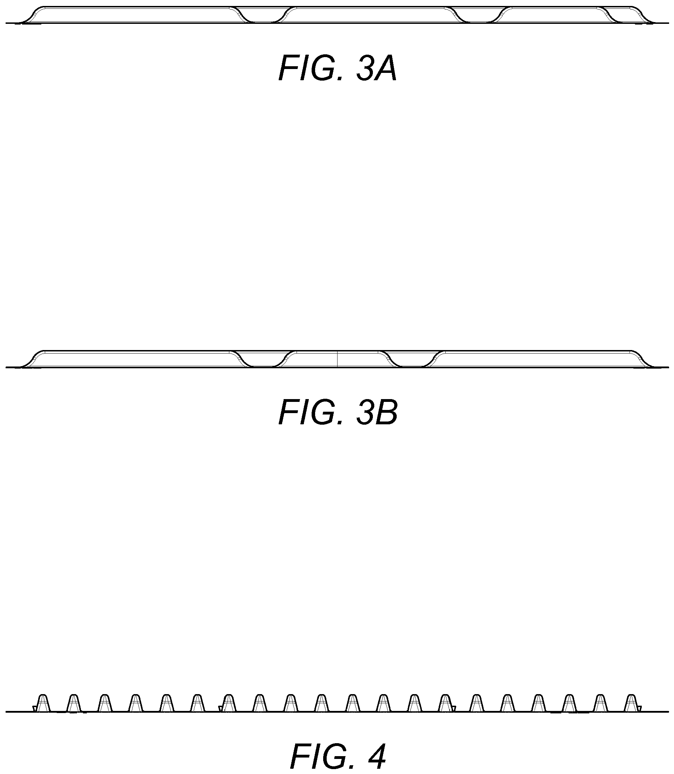

Figures 3A and 3B are is schematic (side) representations of an insert as shown in figure 1,
Figure 4 is a schematic (side) representation of an insert according to the present invention,

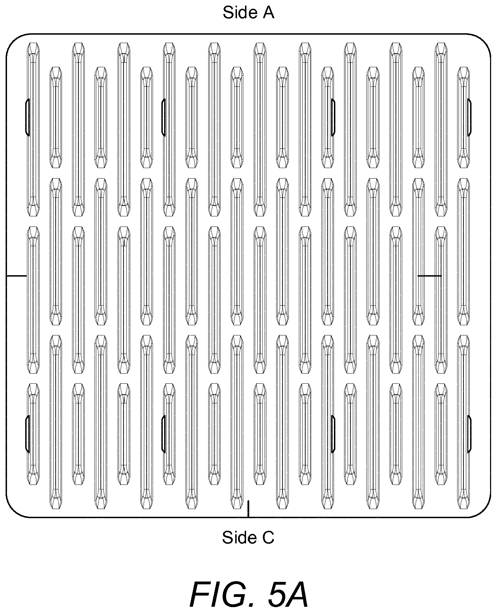

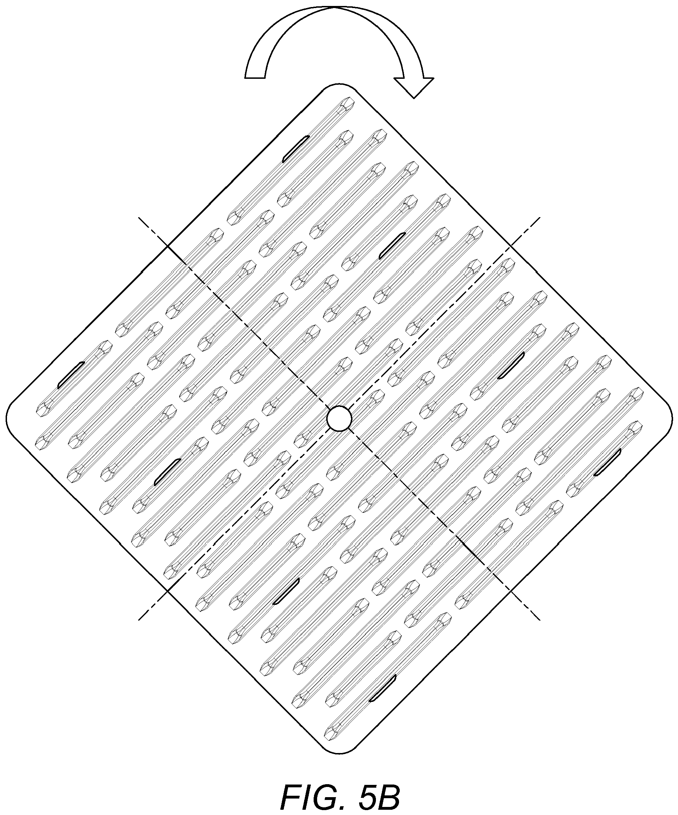

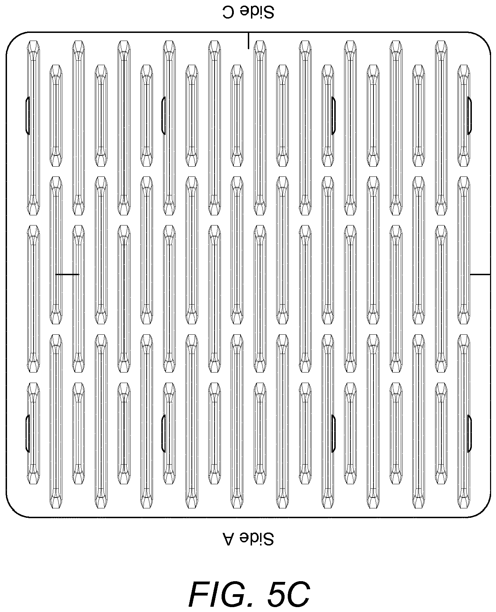

Figures 5A to 5C are schematic representations of a mirror imaged insert according to the present invention,

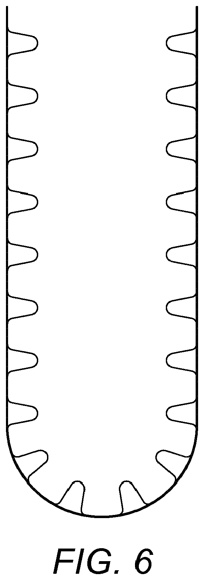

Figure 6 is a schematic side representation of an insert in a folded configuration (U-shape),
Figure 7A is a schematic cross sectional representation of a packaging system according to the present invention, showing a live product in an insert in a folded configuration inside an outer packaging, and
Figure 7B is a schematic (front) representation of the packaging system of figure 7A.

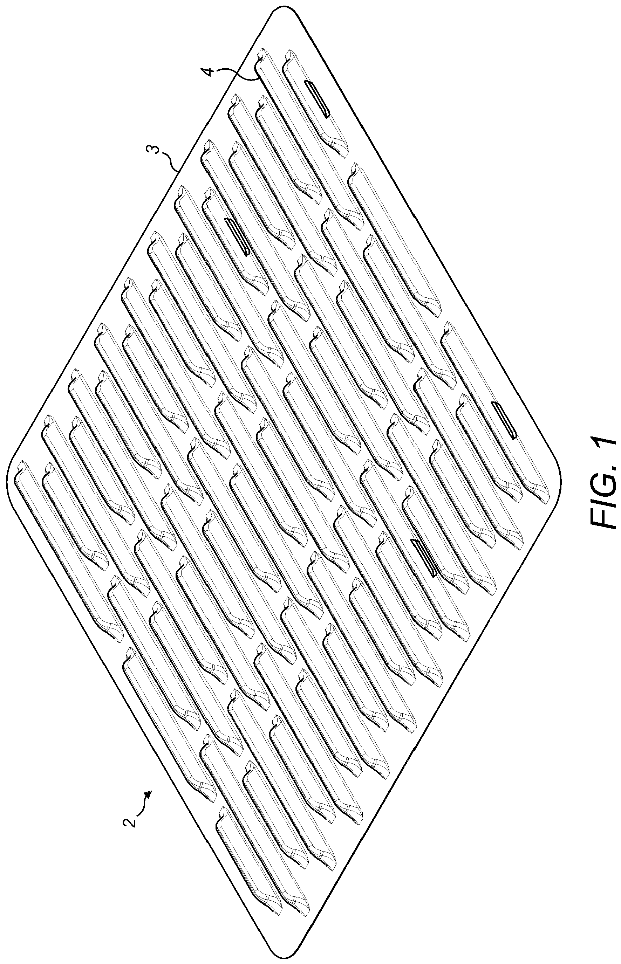

Referring to figure 1, there is illustrated a system 1 for packaging a live product P, said system 1 comprising an insert 2 comprising a base 3 and a plurality of ribs 4 extending therefrom.

In this embodiment, the insert 2 is made of a monolayer of polyethylene terephthalate (PET) such as amorphous polyethylene terephthalate (APET) or recycled polyethylene terephthalate (rPET). This material is favoured for its food compatibility, recyclability and clarity. A monolayer of PET is preferred as any lamination, coating, additional layers may compromise gas permeability and recyclability. The insert 2 is preferably formed through a thermoforming process.

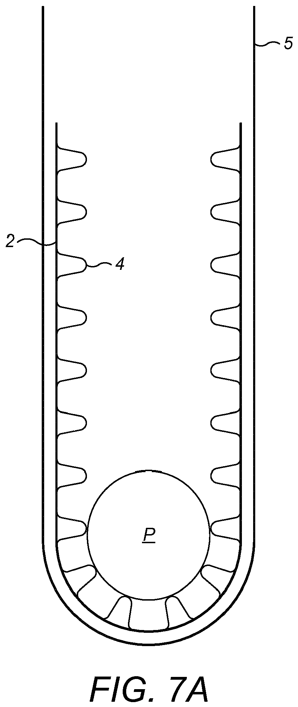

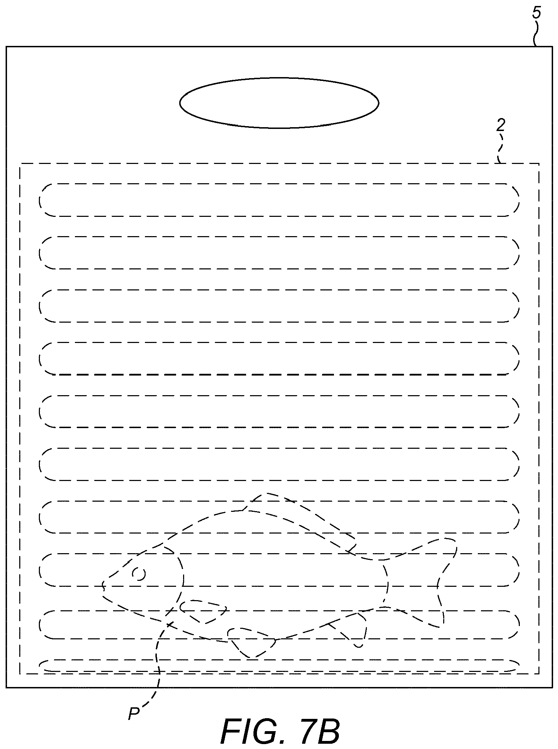

The base 3 is substantially flat in its unfolded state, but may be folded or rolled. For example, the base 3 may be folded into a U-shape (see figures 7 and 8) to receive the live product P in the cradle of the U-shape, or rolled to surround the live product P. This is because the base 3 is made of a material which is flexible enough to allow folding or rolling. The material is also rigid enough so that the insert 3 can in the desired folded or rolled configuration without becoming undone. Thus, the live product P, for example a live fish, is provided into a relatively rigid and atraumatic surrounding and the insert 3 does not slide within the outer packaging 5.

Overall, the ribs 4 extend substantially perpendicularly from the base 3. In this embodiment, the ribs 4 are substantially elongated. Each rib has two long sides 4a and two short sides 4b. The long sides 4a extend substantially perpendicularly from the base 3, but could be sloped (i.e. not perpendicular relative to the base 3). The short sides 4b are sloped relative to the base 3, but could extend substantially perpendicularly from the base 3. The cross section of a rib in a plane substantially parallel to the base 3 is substantially rectangular in shape. This shape improves the general comfort of the live fish but also assists in the folding or rolling of the insert. The cross section in a plane substantially perpendicular to the base 3 is substantially triangular in shape. This shape minimises the surface area of the live fish in contact with the insert 2 so that cutaneous respiration is enhanced.

The insert 3 shown in the figures has a rib pattern consisting of sets of co-linear ribs 4. The rib sets are parallel to each other. Two adjacent ribs 4 in a set are separated by a gap 6. The sets are arranged so that the ribs 4 are in a staggered configuration, and the gaps 6 of two adjacent sets are not aligned with each other. This specific pattern improves air circulation between the base 3 and the fish skin and around the live fish for increased cutaneous gas exchange.

In this embodiment, the outer packaging 5 is a plastics bag, for example made of LDPE. The inner dimensions of the outer packaging 5 are such that the folded insert 2 fit snuggly therein in order to limit movement of the insert 2 within the outer packaging 5.

Although the examples presented herein are in relation to a live product, in particular a live fish capable of cutaneous respiration, it is envisaged that the present invention be used with other animals capable of cutaneous respiration, other products, in particular food products, which require enhanced ventilation.

In use, an insert 3 is thermoformed from a PET sheet. At the point of sale, a live product P, such as a live fish is placed on the insert 3 which is folded into a U-shape or rolled around the live fish then placed in an outer packaging 5. Alternatively, the folded insert 3 is first placed into the outer packaging 5, then the fish is positioned in the cradle of the U-shape or rolled in the insert 3. The U-shape folding is preferred in that the upper part of the fish is not covered and in direct contact with the open air through the mouth of the outer packaging. In a rolled configuration, the fish is more limited in its movement and safely packaged. In another possible embodiment, two inserts 3 are placed on either side of the live fish in the outer packaging 5 but in this case, it is preferred that the inserts 3 are integrally formed or secured to the outer packaging to avoid displacement.

The insert 3 is folded along the parallel ribs 3. In use, e.g. when the outer packaging 5 is carried by a customer to transport the fish, the parallel ribs 3 are horizontal and parallel with the live fish.

When the live fish is packaged in the packaging system 1 according to the present invention, air enters the packaging system 1 through the mouth of the outer packaging 5 and flows from all four sides of the insert 3 to circulate horizontally between the rib sets and vertically between the gaps 6.

Thus, from the above description, it can be seen that the present invention provide a new packaging system to improve cutaneous respiration to decrease stress levels and harm during packaging and transportation and to increase the fish survival rate.

## Claims

1. A system for packaging a live product, said system comprising an insert comprising a base and a plurality of ribs extending therefrom.

2. A packaging system according to claim 1, wherein the live product is an animal product capable of cutaneous respiration.

3. A packaging system according to claim 1 or 2, wherein the live product is a fish.

4. A packaging system as claimed in any preceding claim, wherein the insert comprises a plurality of sets of co-linear ribs, the sets of co-linear ribs being parallel to each other.

5. A packaging system according to any preceding claim, wherein the insert comprises a plurality of continuous ribs, the continuous ribs being parallel to each other.

6. A packaging system according to claim 4 or 5, wherein the distance between two parallel ribs/sets is between 2 mm and 40 mm, preferably 18 mm.

7. A packaging system according any preceding claim, wherein the height of the ribs is between 5 mm and 15 mm, preferably 5 mm to 12 mm, more preferably 10 mm.

8. A packaging system according to any one of claims 4 to 7, wherein the distance between two co-linear ribs is between 25 mm and 50 mm.

9. A packaging system according to any preceding claim, wherein the insert is nestable and/or stackable with another insert of the same type.

10. A packaging system according to claim 9, wherein each rib has one or more sloped sides.

11. A packaging system according to claim 9 or 10, wherein the plurality of ribs are configured and arranged as a mirror image.

12. A packaging system according to any preceding claim, wherein the insert is made of a material which is flexible so that the insert is foldable to partially or completely surround the live product.

13. A packaging system according to any preceding claim, wherein the insert is foldable into a U-shape, or is provided in a U-shape form.

14. A packaging system according to any preceding claim, wherein the insert comprises or consists of polyethylene terephthalate (PET).

15. A packaging system according to claim 14, wherein the insert comprises or consists of amorphous polyethylene terephthalate (APET) or recycled polyethylene terephthalate (rPET).

16. A packaging system according to claim 15, wherein the insert consists of a monolayer of amorphous polyethylene terephthalate (APET).

17. A packaging system according to any preceding claim, wherein the system further comprises an outer packaging configured and arranged to partially surround the insert.

18. A packaging system according to claim 17, wherein the outer packaging comprises a plastics bag.

19. A packaging system according to claim 18, wherein the bag comprises or consists of low density polyethylene (LDPE).

20. A packaging system according to any one of claims 17 to 19, wherein the insert is secured to the outer packaging.

21. A method for transporting one or more live products, such as fish, comprising the step of packaging the live product(s) in the insert in a packaging system as specified in any one of the preceding claims.

22. A method for manufacturing a packaging system as specified in any one of the preceding claims comprising the step of thermoforming an insert.
